# EUROPÄISCHE PATENTSCHRIFT

(11) **EP 1 099 113 B1**
(45) Veröffentlichungstag und Bekanntmachung des Hinweises auf die Patenterteilung: **23.04.2003**
(21) Anmeldenummer: 99934716.4
(22) Anmeldetag: 21.07.1999
(51) Int. Cl.: G01N 29/04

(54) **ULTRASCHALL-PRÜFEINRICHTUNG**
ULTRASONIC TEST DEVICE
DISPOSITIF D'ESSAI ULTRASONIQUE

(30) Priorität: 22.07.1998 DE 19833034
(43) Veröffentlichungstag der Anmeldung: 16.05.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: KRÖNING, Michael, D-66123 Saarbrücken (DE); SALZBURGER, Jürgen, D-66539 Neunkirchen (DE); WALTE, Friedhelm, D-66453 Gersheim (DE)
(74) Vertreter: Schmitt, Meinrad, Dipl.-Ing.
(86) Internationale Anmeldenummer: EP9905198
(87) Internationale Veröffentlichungsnummer: WO00005577

(56) Entgegenhaltungen:
- DE-A- 19 544 217
- US-A- 3 978 712
- US-A- 4 050 292

## Beschreibung

Die Erfindung bezieht sich auf ein Verfahren zur Ultraschallprüfung eines insbesondere als Eisenbahnrad ausgebildeten Prüfkörpers gemäß den im Oberbegriff des Patentanspruchs 1 angegebenen Merkmalen.

Aus der US-A-3 978 712 ist ein derartiges Verfahren zur Ultraschallprüfung bekannt, gemäß welchem zwei Ultraschall-Prüfkopfelemente zum Einsatz gelangen. Die beiden Prüfkopfelemente sind gegeneinander und zu einer Normalen zur Schiene im Berührungsbereich eines Eisenbahnrades geneigt angeordnet. Mittels des einen Prüfkopfelements werden die Ultraschallwellen unter einem vorgegebenen Winkel zur Normalen ausgesendet und in Umfangsrichtung in das Eisenbahnrad eingeleitet, wobei die Ultraschallwellen das Eisenbahnrad in Umfangsrichtung durchlaufen. Hierbei sollen die sich grundsätzlich linear ausbreitenden Ultraschallwellen zu einer kreisförmigen Wellenausbreitung abgelenkt werden. Nach zumindest einem Umlauf tritt ein Teil der Ultraschallwellen im Berührungsbereich aus dem Rad heraus und gelangt zu dem zweiten als Empfänger wirksamen Prüfkopfelement.

Ferner ist aus der DE-A 195 44 217 ein Verfahren zur Ultraschallprüfung eines insbesondere als Eisenbahnschiene ausgebildeten Prüfkörpers bekannt, auf welchem ein Prüfrad abrollbar ist. Das Prüfrad enthält im Bereich seiner auf dem Prüfkörper abrollenden, im wesentlichen zylindrischen Abrollfläche eine Vielzahl von Prüfkopfelementen, von welchen eine Anzahl bzw. Untergruppe einen Prüfkopf bilden, wobei die dem Prüfkörper zugewandten Sende- bzw. Empfangsseiten jeweils im Kontaktbereich der Abrollfäche und der Oberfläche des Prüfkörpers zu liegen kommen. Die Prüfkopfelemente des jeweils aktivierten Prüfkopfes werden in der sogenannten "Phased-Array-Technik" betrieben, wobei durch zeitlich definierte, laufzeitverzögerte Ansteuerung eine Schrägeinstrahlung von Ultraschallwellen in den Prüfkörper vorgegeben werden kann. Mittels einer Detektionseinrichtung, welche insbesondere einen Laser und einen Fotodetektor enthält, ist die Winkelstellung des Prüfrades detektierbar.

Hiervon ausgehend liegt der Erfindung die Aufgabe zugrunde, das Verfahren zur Ultraschallprüfung der genannten Art dahingehend weiterzubilden, daß während des Überrollens eines Prüfkörpers, insbesondere eines Eisenbahnrades, eine Erfassung von Fehlstellen im Volumen und der Oberfläche des Prüfkörpers gewährleistet ist. Der Aufwand soll bei der Handhabung und Auswertung der Prüfung auf ein Minimum reduziert werden. Eisenbahnräder aus verschiedenen Teilen und/oder verschiedenen Materialien sollen in zuverlässiger Weise überprüft werden können, wobei insbesondere auch innenliegende Risse, welche vom Übergang Radscheibe auf den Radkranz ausgehen, mit hoher Sicherheit detektiert werden sollen.

Die Lösung dieser Aufgabe erfolgt gemäß den im Patentanspruch 1 angegebenen Merkmalen.

Das erfindungsgemäße Verfahren zur Ultraschallprüfung zeichnet sich durch eine Erfassung von Fehlstellen, insbesondere innenliegenden Fehlern, wie Rissen des Prüfkörpers, aus. So können bei Ausbildung des Prüfkörpers als Eisenbahnrad, welches aus verschiedenen Teilen und / oder unterschiedlichen Materialien besteht, Fehler erfaßt werden, die beispielsweise vom Übergangsbereich zwischen Radscheibe und Radkranz ausgehen. In einer Ausnehmung oder Nut des Schienenkopfes ist ein lineares Array aus einer Anordnung von Ultraschall-Prüfköpfen vorgesehen, welche in bevorzugter Weise frei von Koppelmittel Ultraschallwellen in den Prüfkörper einstrahlen, wobei in vorteilhafter Weise die Einstellwinkel der Einstrahlung der Ultraschallwellen vorgebbar ist. Die Länge des Arrays ist mindestens gleich groß wie der Umfang des Prüfkörpers und die Prüfkopfelemente sind bevorzugt als elektromagnetische Ultraschallwandler ausgebildet. Die Prüfung erfolgt während des Überrollens des Prüfkörpers, wobei mittels einer Detektionsvorrichtung, welche insbesondere zwei Positionsdetektoren, wie Lichtschranken, enthält, das Einrollen des Prüfkörpers in die Prüfkopfarray-Strecke sowie die Geschwindigkeit des Prüfkörpers bzw. Rades festgestellt wird. Aus der festgestellten und / oder berechneten Geschwindigkeit wird eine mit der Radbewegung synchrone Aktivierung bzw. Deaktivierung einer vorgegebenen Anzahl von Elementen des Arrays gesteuert, welche eine Untergruppe bilden. Die Anzahl M der jeweiligen Elemente einer Untergruppe werden entsprechend dem größten zulässigen Abstand der beiden Randelemente zur Radoberfläche und / oder der geforderten Richtcharakteristik und / oder der erforderlichen Prüfempfindlichkeit vorgegeben. In bevorzugter Weise wird die Anzahl M zwischen 3 bis 11, insbesondere zwischen 5 bis 9 vorgegeben.

Beim Einrollen des Prüfkörpers bzw. Rades in das Prüfkopfarray-Strecke wird die erste Untergruppe des linearen Arrays mit M Einzelelementen aktiviert und zwar derart, daß der Berührungspunkt zwischen Rad und Schiene symmetrisch zur Mitte der Untergruppe liegt. Der Aktivierungs-/Triggerzeitpunkt (Master-Trigger) errechnet sich aus der zuvor ermittelten Geschwindigkeit des Rades und dem Abstand des Zentrums der Untergruppe zur Position der Lichtschranken. Diese Aufgabe übernimmt ein Trigger-Modul. Durch eine elektronische Laufzeitverzögerung bei der Anregung der einzelnen Untergruppenelemente wird der Ultraschall als eine Transversalwelle mit horizontaler Polarisation unter vorgebbaren Winkeln zwischen 35° und 90° zur Oberflächennormalen in das Rad eingekoppelt. Die entsprechenden Ansteuer-Zeitpunkte der Array-Elemente errechnen sich aus dem Master-Trigger. Durch dieses elektronische Schwenken des von der Untergruppe erzeugten Schallbündels lassen sich Fehler im Volumen sowie an der Lauffläche und an der Innenseite des Rades nachweisen. Während das Rad sich über die Schiene bewegt, wird errechnet aus dem Mastertrigger, der ermittelten Radgeschwindigkeit und dem bekannten Abstand der Array-Elemente, jeweils ein Element der Untergruppe abgeschaltet und ein neues zugeschaltet. Durch diese Vorgehensweise und mittels eines über das Trigger-Modul gesteuerten Multiplexer genügt für die Ultraschall-Prüfvorrichtung eine Kanalanzahl von M. Der Schaltungsaufwand wird hierdurch erheblich vereinfacht. Durch das Abrollen des Prüfkörpers auf der die Prüfkopfelemente enthaltenden Schiene ist die Relativgeschwindigkeit im Berührungspunkt, d.h. für das Mittelelement der Untergruppe exakt Null und für die rechts und links liegenden Untergruppenelemente sehr gering, so daß ein störendes akustisches Barkhausenrauschen infolge der Ummagnetisierung durch räumlich inhomogene Magnetfelder des Prüfkopf-Elementes nicht auftritt.

In einem bevorzugten Ausführungsbeispiel sind die Einzelelemente des linearen Prüfkopfarrays in einer Aussparung oder Nut in der Schiene untergebracht, um so vor mechanischem Verschleiß geschützt zu sein. Die Stellung des Prüfkörpers und damit die Position der Prüfkopfelemente relativ zum Prüfkörper ist mittels des besagten Trigger-Moduls bestimmbar, dessen Ausgangssignale in einer Steuer- und Auswerteschaltung zusammen mit den von den Prüfkopfelementen empfangenen Meßsignalen abspeicherbar sind, so daß ausgehend von einer Referenzposition nach Durchführung der Prüfung fehlerhafte Stellen in dem Prüfkörper lokalisiert werden können.

Weiterbildungen und besondere Ausgestaltungen der Erfindung sind in den Unteransprüchen angegeben.

Die Erfindung wird nachfolgend anhand der in der Zeichnung dargestellten Ausführungsbeispielen näher erläutert, ohne daß insoweit eine Beschränkung erfolgt. Es zeigen:
- Fig. 1: eine perspektivische Ansicht eines auf einer Schiene abrollenden Prüfkörpers,
- Fig. 2, 3: schematisch einen Längsschnitt im Bereich des Berührungspunktes zwischen Prüfkörper und Schiene,
- Fig. 4: ein Ausführungsbeispiel eines Prüfkopfelements ,
- Fig. 5: vergrößert einen Schnitt quer zur Längsrichtung der Schiene,
- Fig. 6: einen Schnitt entlang Schnittlinie A gemäß Fig. 5,
- Fig. 7: vergrößert einen Schnitt durch ein weiteres Ausführungsbeispiel quer zur Längsrichtung der Schiene,
- Fig. 8: einen Schnitt entlang Schnittlinie B gemäß Fig. 7.

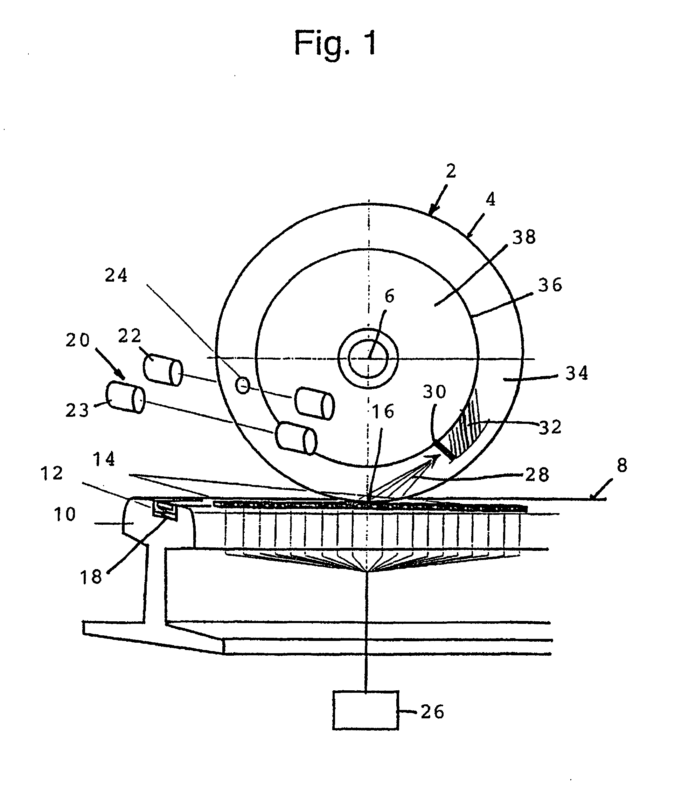

Fig. 1 zeigt einen zumindest näherungsweise zylindrischen Prüfkörper 2, welcher insbesondere als Eisenbahnrad ausgebildet ist, eine Lauffläche 4 aufweist und um eine zur Zeichenebene orthogonale Achse 6 drehbar gelagert ist. Der Prüfkörper 6 ist mit seiner Lauffläche 4 auf einer Fahrfläche 8 einer Schiene 10 abrollbar, welche hier als Eisenbahnschiene ausgebildet ist. Die Schiene 10 enthält in der Fahrfläche 8 eine sich in Längsrichtung erstreckende _Ausnehmung oder Nut 12 mit einer vorgegebenen Anzahl m von Prüfkopfelementen 14. Die bevorzugt elektromagnetischen Prüfkopfelemente 14 sind in die Nut 12 in Form eines linearen Arrays integriert. Die Anzahl m ist zumindest gleich groß wie der Quotient aus dem Umfang der Lauffläche 4 des Prüfkörpers 5 und der in Längsrichtung der Schiene 10 gemessenen Breite der einzelnen Prüfkopfelemente 14. So beträgt bei der typischen Ausbildung des Prüfkörpers 5 als Eisenbahnrad mit einem Durchmesser von 880 mm und bei einer kleinsten Breite der Prüfkopfelemente 14 von 5 mm die Anzahl m = 552. Beim Abrollen der Lauffläche 4 des Prüfkörpers 2 auf bzw. entlang der Fahrfläche 8 wird erfindungsgemäß jeweils nur eine Untergruppe der Prüfkopfelemente 14 aktiviert, welche sich im Bereich des Auflagepunktes bzw. der Auflagelinie 16 der Lauffläche 4 auf der Fahrfläche 8 befindet. Die Anzahl M der Untergruppenelemente wird unter Berücksichtigung des größten zulässigen Abstandes der an den beiden Rändern der Untergruppe befindlichen Prüfkopfelemente zur Lauffläche 4 oder Radoberfläche, der geforderten Richtcharakteristik der mittels der Prüfkopfelemente ausgesandten Schallwellen und der geforderten Prüfempfindlichkeit vorgegeben. Die einzelnen Prüfkopfelemente 14 sind in der Nut 12 zweckmäßig mittels Federelementen 18 federelastisch gelagert.

Die Prüfeinrichtung enthält ferner eine Detektionsvorrichtung 20 zur Bestimmung der Position des Prüfkörpers 2 bezüglich einer vorgebbaren Anfangsposition, insbesondere des Arrays der Prüfkopfelemente 14. Die Detektionsvorrichtung 20 enthält insbesondere zwei Lichtschranken 22, 23 sowie einen auf dem Prüfkörper 2 angeordneten Spiegel 24. Die Detektionsvorrichtung 20 ist ebenso wie die Prüfkopfelemente 14 mit einer Steuer- und Auswerteschaltung 26 verbunden, in welcher die zugeführten Signale ausgewertet und zur Steuerung der Prüfeinrichtung genutzt werden. So wird die jeweilige Position des Prüfkörpers 2 zur Ausgangsposition und ferner die laterale Geschwindigkeit des Prüfkörpers bzw. Eisenbahnrades 2 in Längsrichtung der Schienen bestimmt. Unter Berücksichtigung der Positionsdaten und der lateralen Radgeschwindigkeit wird beim Abrollen des Prüfkörpers 2 auf der Schiene 10 erfindungsgemäß jeweils eine Untergruppe mit der Anzahl M der gesamten Prüfkopfelemente m derart aktiviert, daß die jeweils aktivierten Prüfkopfelemente insbesondere symmetrisch zum jeweiligen Berührungspunkt bzw. der Berührungslinie 16 zwischen Prüfkörper 2 und Schiene 10 liegen.

Bei einer Untergruppe der in der Auflagefläche bzw. im Bereich des Auflagepunktes 16 vorhandenen Prüfkopfelemente 14 wird über eine Laufzeitverzögerung derart angeregt, daß eine Ultraschallwelle 28 mit horizontaler Polarisation und hinreichender Richtwirkung in den Prüfkörper 2 eingeschallt wird, so daß Fehler 30 im Volumenbereich 32, und zwar ausgehend von der Lauffläche 4 beschallt werden können und den Ultraschall in Richtung der genannten Untergruppe reflektieren. So können bei Ausbildung des Prüfkörpers 2 als Eisenbahnrad mit einem Radreifen oder Radkranz 34 auch Fehler im Bereich der inneren Bohrungsfläche 36 und / oder der Radscheibe 38 erfaßt und gemessen werden. Die Prüfkopfelemente der Untergruppe empfangen den reflektierten Ultraschall und führen die Meßsignale der Steuer- und Auswerteschaltung 26 zu. Mittels der Positions-Detektionsvorrichtung 20 wird das Einrollen des Prüfkörpers in die Prüfkopfarray-Strecke sowie die Geschwindigkeit des Rades in Verbindung mit der Auswerteschaltung 26 festgestellt und die mit der Radbewegung synchrone Aktivierung bzw. Deaktivierung der vorgegebenen Anzahl der Prüfkopfelemente der jeweiligen Untergruppe des Arrays gesteuert. Mit Hilfe der Positionsdaten und der lateralen Radgeschwindigkeit wird beim Abrollen des Prüfkörpers 2 auf der Schiene 10 jeweils eine Untergruppe mit der Anzahl M der Prüfkopfelemente 2 derart aktiviert, daß diese symmetrisch zum jeweiligen Auflage- bzw. Berührungspunkt 16 liegen. Beim Abrollen des Prüfkörpers 2 auf der Schiene 10 wird jeweils ein Prüfkopfelement der Untergruppe abgeschaltet und ein neues Element zugeschaltet, bis der Umfang bzw. die Lauffläche 4 über dem gesamten linearen Array der Prüfkopfelemente 14 abgerollt ist. Nach Reflexion von Ultraschallwellen an Fehlstellen 30 im Volumenbereich 32 oder im Übergang vom Radkranz 34 und Radscheibe 38 werden die Ultraschallwellen in Abhängigkeit der mittels der Detektionsvorrichtung 20 bestimmten Stellungen des Prüfkörpers 2 mit der Steuer- und Auswerteschaltung 26 ausgewertet. Es sei festgehalten, daß mittels der erfindungsgemässen Ultraschall-Prüfeinrichtung ohne den Einsatz von Koppelmittel, wie Wasser oder dergleichen, zwischen dem Prüfkörper und der Schiene die Überprüfung durchgeführt wird.

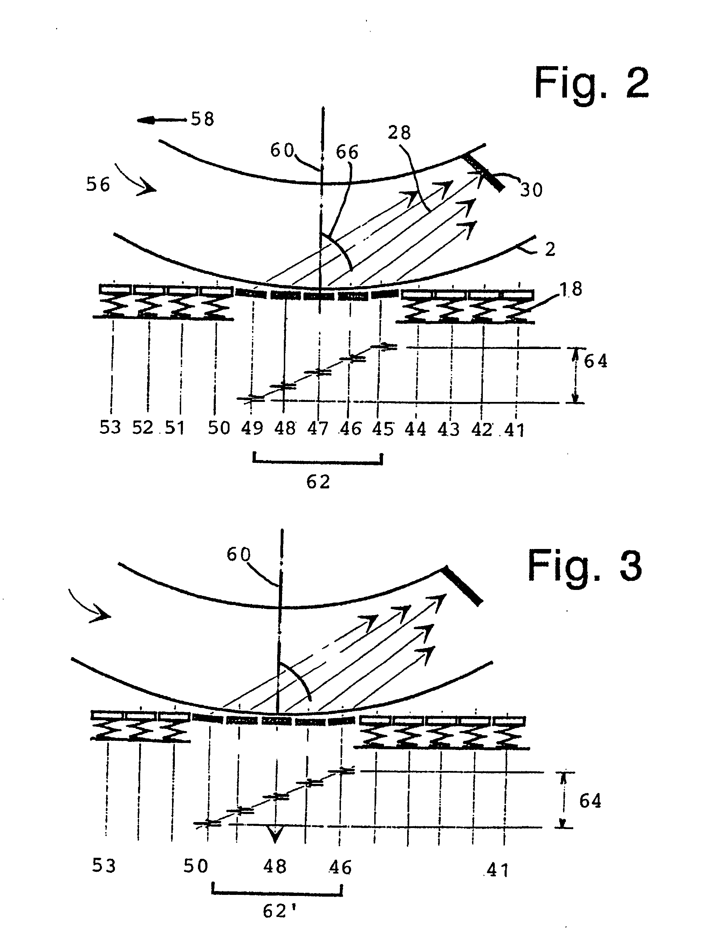

Fig. 2 zeigt vergrößert einen Teil des Prüfkörpers 2 und einige dem Auflagepunkt 16 benachbarte Prüfkopfelemente, welchen die Bezugszeichen 41 bis 53 zugeordnet sind. Es sei davon ausgegangen, daß der Prüfkörper 2 sich um seine Drehachse in Richtung des Pfeiles 56 dreht, so daß der Prüfkörper 2 auf der Schiene 10 in Richtung des Pfeiles 58 lateral abrollt, wobei die Drehachse auf der Normalen 60 im Auflagepunkt 16 liegt. Die einzelnen Prüfkopfelemente sind mittels der genannten Federelemente 18 in der hier nicht weiter dargestellten Schiene federnd gelagert, wobei aus Gründen der Übersicht die Federelemente der der Normalen 60 nächstliegenden fünf Prüfkopfelemente 45 bis 49 nicht dargestellt sind. Die genannten fünf Prüfkopfelemente 45 bis 49 bilden eine Untergruppe 62. Erfindungsgemäß werden die genannten Prüfkopfelemente der Untergruppe 62 nicht gleichzeitig, sondern nacheinander mit einer Laufzeitverzögerung 64 derart angeregt, daß der Schall in den Prüfkörper 2 schräg, und zwar unter einem Winkel 66, zur Normalen 60 eingeschallt wird. Die gesamte Laufzeitverzögerung 64 wird den jeweiligen Anforderungen entsprechend für den gewünschten Einschallwinkel 66 vorgegeben. Auch die Anzahl M der Prüfkörper der Untergruppe 62 wird entsprechend den jeweiligen Rahmenbedingungen vorgegeben, wobei der größte zulässige Abstand der beiden Randelemente der Untergruppe, gemäß Fig. 2 sind es die äußeren Randelemente 45 und 49, zur Lauf- oder Oberfläche 4 des Prüfkörpers 2, ferner die geforderte Richtcharakteristik bzw. der Einschallwinkel 66 sowie die geforderte Prüfempfindlichkeit bei der Vorgabe der Anzahl M der Untergruppe 62 berücksichtigt werden. Die Anzahl M ist bevorzugt zwischen 3 bis 11 und insbesondere zwischen 5 und 9 vorgegeben. Mittels der erläuterten Auswerte- und Steuerschaltung wird elektronisch die Laufzeitverzögerung 64 bei der zeitlich versetzten Anregung der einzelnen Elemente der Untergruppe 62 vorgegeben, wobei erfindungsgemäß der Ultraschall als eine Transversalwelle mit bevorzugt horizontaler Polarisation unter dem Einschallwinkel 66 in einem Bereich zwischen 90° und 35° zur Normalen 60 in den Prüfkörper 2 eingekoppelt wird.

Fig. 3 zeigt den Prüfkörper 2 in einer Position, welche der Prüfkörper 2 kurz nach der Position gemäß Fig. 2 einnimmt. Es wird nunmehr die Untergruppe 62' mit den Prüfkopfelementen 46 bis 50 aktiviert bzw. mit der Laufzeitverzögerung 64 angesteuert. Im Vergleich mit Fig. 2 ist das Prüfkopfelement 45 abgeschaltet, während das Prüfkopfelement 50 hinzugeschaltet ist. Das mittlere Prüfkopfelement der Untergruppe 62' ist nunmehr das Prüfkopfelement 48, durch welches die Normale 60 verläuft. Wie ersichtlich, liegt auch hier der Berührungspunkt 16 im Zentrum der Untergruppe 62'. Der Aktivierungs- oder Triggerzeitpunkt, welcher als Master-Trigger bezeichnet wird, wird aus der zuvor ermittelten Geschwindigkeit des Prüfkörpers 2 und dem Abstand des Zentrums der Untergruppe 62' zur Position der oben erläuterten Detektionsvorrichtung bestimmt und insbesondere mittels der Auswerte- und Steuerschaltung 26 errechnet. Die zeitverzögerten Ansteuer-Zeitpunkte der einzelnen Prüfkopfelemente der jeweils aktivierten Untergruppe werden aus dem Master-Trigger errechnet.

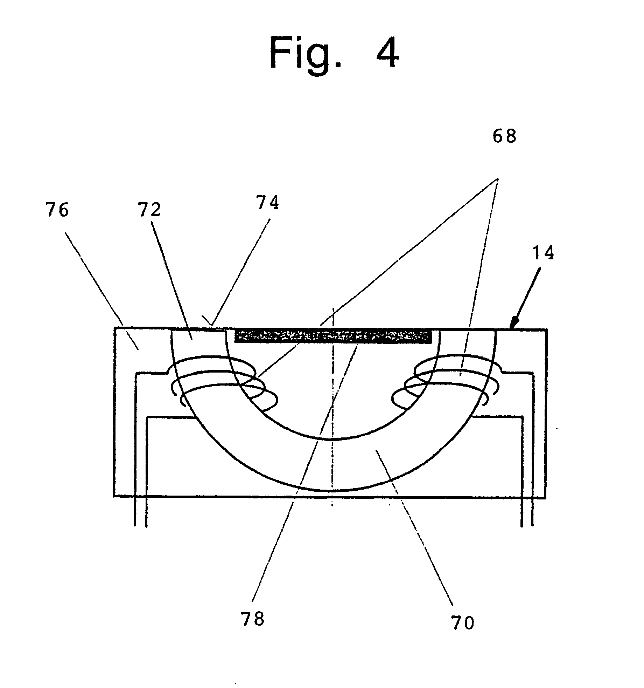

Fig. 4 zeigt einen Schnitt durch das elektromagnetische Prüfkopfelement 14 zum Erzeugen von horizontal polarisierten Transversalwellen. Das Prüfkopfelement 14 enthält einen von einer Hochfrequenzspule 68 umwickelten, magnetisierbaren halbkreisförmigen Ringbandkern 70, der mit seinen Enden 72 zur Meßseite 74 weisend in einem Vergußblock 76 angeordnet ist. Zwischen den Enden 72 des Ringbandkernes 70 sind stabförmige Permanentmagnete 78 angeordnet, die sich in ihrer Längsrichtung zwischen den Enden 72 des Ringbandkerns 70 erstrecken.

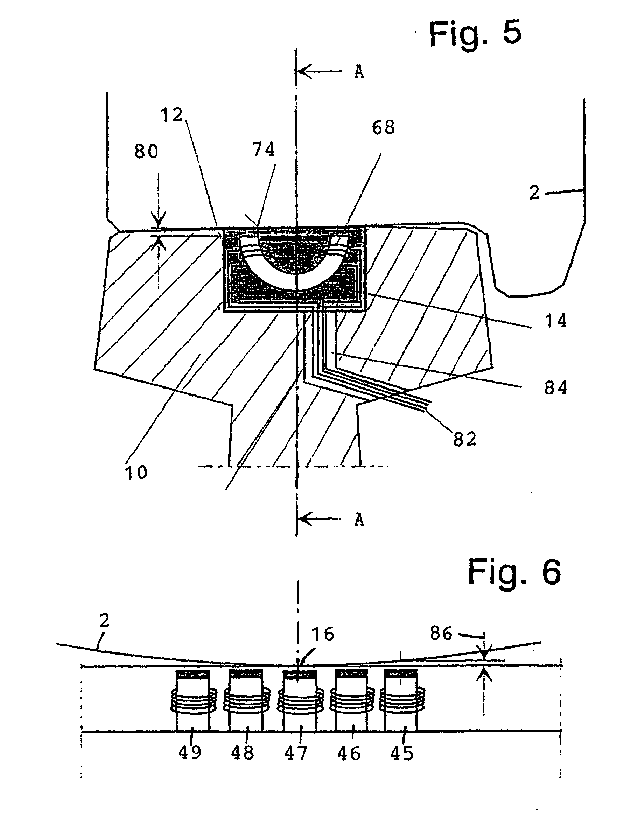

Fig. 5 zeigt einen Querschnitt durch ein in die Schiene 10 integriertes Prüfkopfelement 14, welches in der Nut 12 der Schiene 10 fest montiert ist, so daß die Meßseite 74 einen Abstand 80 zur Schienenoberfläche bzw. Fahrfläche 8 aufweist. Der Abstand 80 beträgt insbesondere zwischen 0,1 bis 0,2 mm. Die elektrischen Anschlußleitungen 82 der HF-Spule 68 für die Signalanregung im Sendefall und den Signalempfang im Empfangsfall sind in einem in die Schiene 10 integrierten Kabelkanal 84 angeordnet und in hier nicht weiter dargestellter Weise mit der erläuterten Auswerte- und Steuerschaltung verbunden.

Fig. 6 zeigt in einem Schnitt entlang Schnittlinie A gemäß Fig. 5 mit den fünf aktivierten Prüfkopfelementen 45 bis 49 der Untergruppe. Die vom zentralen Element 47, über welchem der Berührungspunkt 16 sich befindet, entfernt liegenden Rand-Prüfkopfelemente 45 und 49 weisen zum Rad 2 entsprechend dessen Durchmesser einen vergrößerten Spalt 86 auf. Dieser größere Spalt führt zu einer verminderten Anregung der Randelemente 45 und 49 der Untergruppe und entsprechend auch der weiter innen liegenden Elemente 46 und 48. Zur Kompensation werden im Rahmen der Erfindung die Randelemente 45, 46 und 48, 49 der hier dargestellten Untergruppe, entsprechendes gilt für die jeweils aktivierte Untergruppe, bei der in der Laufzeit verzögerten Anregung mit einer höheren Amplitude beaufschlagt.

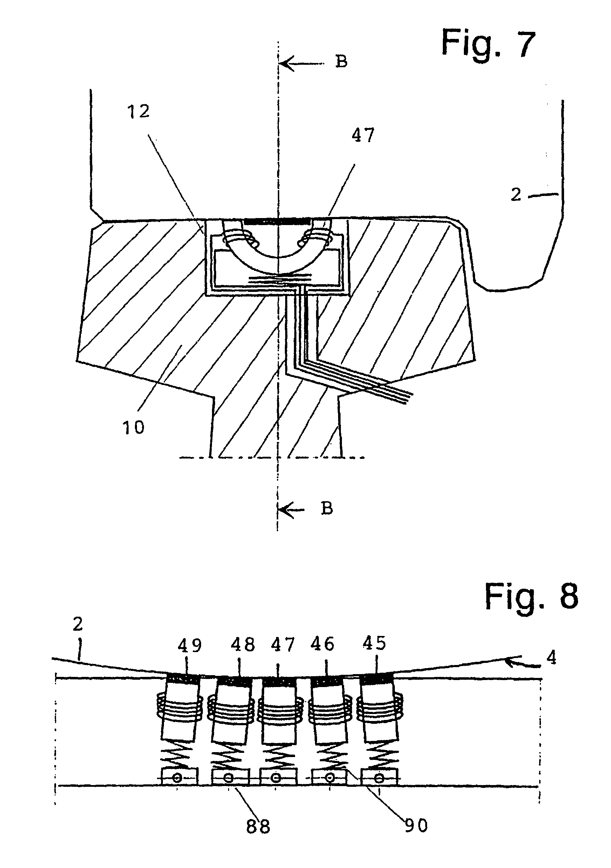

Fig. 7 und 8 zeigen ein anderes Ausführungsbeispiel, ähnlich Fig. 5, 6, der in die Nut 12 der Schiene 10 integrierten Prüfkopfelemente 45 bis 49. Diese Prüfkopfelemente sind mittels einer kardanischen Aufhängung 88 und einem Federelement 90 in der Nut 12 der Schiene 10 angeordnet. Beim Abrollen der Lauffläche 4 des Prüfkörpers 2 auf der Fahrfläche 8 der Schiene 10 haften die jeweiligen Prüfkopfelemente der aktiven Untergruppe infolge der magnetischen Haltekräfte, insbesondere aufgrund des anhand von Fig. 4 erläuterten Ringbandkerns und / oder der Permanentmagnete, an der Lauffläche 4 und eine gleichmäßige Anregung aller Prüfkopfelemente der jeweils aktivierten Untergruppe wird ermöglicht.

### Bezugszeichen

- 2: Prüfkörper
- 4: Lauffläche von 2
- 6: Achse von 2
- 8: Fahrfläche von 10
- 10: Schiene
- 12: Ausnehmung / Nut in 10
- 14: Prüfkopfelement
- 16: Auflagepunkt / Berührungspunkt
- 18: Federelement
- 20: Detektionsvorrichtung
- 22, 23: Lichtschranke
- 24: Spiegel
- 26: Auswerte- und Steuerschaltung
- 28: Ultraschallwelle
- 30: Fehler
- 32: Volumenbereich
- 34: Radkranz
- 36: Bohrungsfläche
- 38: Radscheibe
- 41 - 53: Prüfkopfelement
- 56: Pfeil / Drehrichtung
- 58: Pfeil / laterale Bewegung
- 60: Normale
- 62: Untergruppe
- 64: Laufzeitverzögerung
- 66: Einschallwinkel
- 68: Hochfrequenzspule
- 70: Ringbandkern
- 72: Ende von 70
- 74: Meßseite
- 76: Vergußblock
- 78: Permanentmagnet
- 80: Abstand
- 82: elektrische Anschlußleitung
- 84: Kabelkanal
- 86: Spalt
- 88: kardanische Aufhängung
- 90: Federelement

## Patentansprüche

1. Verfahren zur Ultraschallprüfung eines insbesondere als Eisenbahnrad ausgebildeten Prüfkörpers (2), welcher über eine Lauffläche (4) auf einer Fahrfläche (8) einer Schiene (10) entlang rollbar ist, wobei in der Schiene (10) wenigstens ein Ultraschall-Prüfkopfelement (14) angeordnet ist zum Aussenden von Ultraschallwellen unter einem vorgegebenen Winkel (66) zur Normalen (60) der Schiene (10) in den Prüfkörper (2) und zum Empfang von in den Prüfkörper (2) ausgesendeten und insbesondere auf Fehlstellen desselben treffenden Ultraschallwellen,
**dadurch gekennzeichnet, dass** eine Anzahl (m) von Prüfkopfelementen (14) als lineares Array in einer Nut (12) der Schiene (10) angeordnet sind, wobei die Anzahl (m) zumindest gleich groß ist wie der Quotient aus dem Umfang der Lauffläche (4) und der in Längsrichtung der Schiene gemessenen Breite der nebeneinander angeordneten einzelnen Prüfkopfelemente (14),
dass eine Untergruppe (62) mit einer vorgegebenen Anzahl (M) der Prüfkopfelemente (14) aktiviert wird, welche sich im Bereich der Auflagelinie (16) der Lauffläche (4) auf der Fahrfläche (8) befindet,
dass mittels einer Detektionsvorrichtung (20) das Einrollen des Prüfkörpers (2) in das Prüfkopfarray festgestellt wird und ferner die Geschwindigkeit des Prüfkörpers (2) berechnet wird,
dass zur Ultraschallprüfung des aus verschiedenen Teilen oder unterschiedlichen Materialien bestehenden Prüfkörpers (2) die Prüfkopfelemente (14) der jeweils aktivierten Untergruppe (62) mit einer Laufzeitverzögerung (64) derart angesteuert werden, dass die Ultraschallwellen mit horizontaler Polarisation in einen Volumenbereich (32) des Prüfkörpers (2) eingeleitet und an den Fehlstellen reflektiert werden,
und dass ferner in Abhängigkeit der Geschwindigkeit des Prüfkörpers (2) eine synchrone Aktivierung bzw. Deaktivierung jeweils eines Prüfkopfelementes der Untergruppe (62) erfolgt.

2. Verfahren nach Anspruch 1, **dadurch gekennzeichnet, dass** die Anzahl (M) der jeweils aktivierten Prüfkopfelemente (14) der Untergruppe (62) zwischen 3 bis 11, insbesondere zwischen 5 bis 9, beträgt.

3. Verfahren nach Anspruch 1 oder 2, **dadurch gekennzeichnet, dass** durch federnde Lagerung, insbesondere durch Federelemente (18) in der Schiene (10), die Prüfkopfelemente (14) der jeweils aktivierten Untergruppe (62) zur direkten Anlage an der Lauffläche (4) des Prüfkörpers (2) gebracht werden.

4. Verfahren nach einem der Ansprüche 1 bis 3, **dadurch gekennzeichnet, dass** die Prüfkopfelemente (14) der jeweils aktivierten Untergruppe (62) mittels kardanischer Aufhängung (88) in der Schiene (10) zur direkten Anlage an die Lauffläche (4) des Prüfkörpers (2) gebracht werden.

5. Verfahren nach einem der Ansprüche 1 bis 4, **dadurch gekennzeichnet, dass** die jeweils in der aktivierten Untergruppe (62) neben demjenigen zentralen Prüfkopfelement, durch welches in der Berührungslinie (16) die Normale (60) läuft, liegenden Prüfkopfelemente (14) mit einer höheren Amplitude beaufschlagt werden als das genannte zentrale Prüfkopfelement, wobei die genannten anderen Prüfkopfelemente (14) insbesondere symmetrisch zum zentralen Prüfkopfelement liegen.

## Claims

1. Process for the ultrasonic testing of a test piece (2), particularly in the form of a railway wheel, which can roll along on a running surface (8) of a rail (10) via a tread (4), at least one ultrasonic probe element (14) being arranged in the rail (10) in order to emit ultrasonic waves into the test piece (2) at a predetermined angle (66) relative to the normal (60) of the rail (10) and to receive ultrasonic waves emitted into the test piece (2) and impinging, in particular, upon defects thereof, **characterised in that** a number (m) of probe elements (14) are arranged in a groove (12) in the rail (10) in the form of a linear array, the number (m) being at least equal to the quotient of the circumference of the tread (4) and the width of the individual probe elements (14) arranged one alongside the other as measured in the longitudinal direction of the rail, that a subgroup (62) with a predetermined number (M) of probe elements (14) situated on the running surface (8) in the region of the line of support (16) of the tread (4) is activated, that a detection device (20) determines when the test piece (2) rolls into the probe array and furthermore calculates the speed of the test piece (2), that, for the ultrasonic testing of the test piece (2) consisting of different parts or different materials, the probe elements (14) of the respective subgroup (62) activated are controlled with a travel-time delay (64) such that the ultrasonic waves are introduced with horizontal polarisation into a volume region (32) of the test piece (2) and are reflected at the defects, and that a respective probe element of the subgroup (62) is furthermore synchronously activated or deactivated as a function of the speed of the test piece (2).

2. Process according to claim 1, **characterised in that** the number (M) of respective probe elements (14) of the subgroup (62) activated is between 3 and 11, in particular between 5 and 9.

3. Process according to claim 1 or claim 2, **characterised in that** the probe elements (2) of the respective subgroup (62) activated are brought into direct contact with the tread (4) of the test piece (2) by means of a resilient bearing arrangement, in particular by means of spring elements (18) in the rail (10).

4. Process according to one of claims 1 to 3, **characterised in that** the probe elements (14) of the respective subgroup (62) activated are brought into direct contact with the tread (4) of the test piece (2) by means of a cardanic suspension (88) in the rail (10).

5. Process according to one of claims 1 to 4, **characterised in that** the respective probe elements (14) in the subgroup (62) activated situated alongside the central probe element through which the normal (60) extends at the line of contact (16) are subject to a higher amplitude than the said central probe element, the other said probe elements (14) being situated, in particular, symmetrically relative to the central probe element.

## Revendications

1. Procédé d'essai ultrasonique d'un corps d'essai (2) conformé en particulier en roue ferroviaire, qui peut rouler par l'intermédiaire d'une surface de roulement (4) sur une surface de déplacement (8) d'un rail (10), au moins un élément de tête d'essai ultrasonique (14) étant placé dans le rail (10) pour envoyer des ondes ultrasonores dans le corps d'essai (2) sous un angle (66) prédéterminé par rapport à la normale (60) au rail (10) et pour recevoir des ondes ultrasonores émises dans le corps d'essai (2) et arrivant en particulier sur des défauts de celui-ci,
***caractérisé en ce qu***'un nombre (m) d'éléments de tête d'essai (14) est disposé sous forme de réseau linéaire dans une rainure (12) du rail (10), le nombre (m) étant au moins aussi grand que le quotient entre la circonférence de la surface de roulement (4) et la largeur des différents éléments de tête d'essai (14) juxtaposés, mesurée dans la direction longitudinale du rail,
***en ce qu'***un sous-groupe (62) comportant un nombre prédéterminé (M) d'éléments de tête d'essai (14) est activé, qui se trouve sur la surface de déplacement (8) au niveau de la ligne d'appui (16) de la surface de roulement (4),
***en ce qu***'au moyen d'un dispositif de détection (20), le roulement du corps d'essai (2) dans le réseau de tête d'essai est détecté et, de plus, la vitesse du corps d'essai (2) est calculée,
***en ce que,*** pour l'essai par ultrasons du corps d'essai (2) composé de différentes parties ou différents matériaux, les éléments de tête d'essai (14) du sous-groupe (62) respectif activé sont commandés avec un retard de temps de parcours (64) de telle sorte que les ondes ultrasonores à polarisation horizontale sont introduites dans un volume (32) du corps d'essai (2) et sont réfléchies sur les défauts,
et ***en ce que,*** de plus, en fonction de la vitesse du corps d'essai (2), une activation ou désactivation synchrone d'un élément de tête d'essai du sous-groupe (62) a lieu.

2. Procédé selon la revendication 1, ***caractérisé en ce que*** le nombre (M) des éléments de tête d'essai (14) activés du sous-groupe (62) vaut entre 3 et 11, en particulier entre 5 et 9.

3. Procédé selon la revendication 1 ou 2, ***caractérisé en ce que*** par un montage élastique, en particulier par des éléments élastiques (18) dans le rail (10), les éléments de tête d'essai (14) du sous-groupe (62) activé sont mis en appui direct contre la surface de roulement (4) du corps d'essai (2).

4. Procédé selon l'une quelconque des revendications 1 à 3, ***caractérisé en ce que*** les éléments de tête d'essai (14) du sous-groupe activé (62) sont mis en appui direct contre la surface de roulement (4) du corps d'essai (2) au moyen d'une suspension par cardan (88) dans le rail (10).

5. Procédé selon l'une quelconque des revendications 1 à 4, ***caractérisé en ce que*** les éléments de tête d'essai (14) situés, dans le sous-groupe (62) activé, à côté de l'élément de tête d'essai central par lequel passe la normale (60) sur la ligne de contact (16), sont sollicités avec une amplitude plus grande que ledit élément de tête d'essai central, les autres éléments de têtes d'essai (14) mentionnés étant situés en particulier de manière symétrique par rapport à l'élément de tête d'essai central.
